# EUROPÄISCHE PATENTANMELDUNG

(11) **EP 2 781 386 A1**
(43) Veröffentlichungstag der Anmeldung: **24.09.2014**
(21) Anmeldenummer: 14160804.2
(22) Anmeldetag: 20.03.2014
(51) Int. Cl.: B60J 10/02, B60J 10/00

(54) **Halterung für eine Fenstereinheit**

(30) Priorität: 21.03.2013 DE 102013204992
(71) Anmelder: Bombardier Transportation GmbH, 10785 Berlin (DE)
(72) Erfinder: Bieber, Rüdiger, 06118 Halle (DE)
(74) Vertreter: Patentanwälte Bressel und Partner mbB

(57) **Zusammenfassung**

Die Erfindung betrifft eine Halterung für eine Fenstereinheit in einem in der Fahrzeugwandung eines Fahrzeuges vorgesehenen Fensterausschnitt (10), mit einem die Fenstereinheit (1) umlaufend erfassenden elastischen Fenstereinfassprofil (2), welches einen die Fenstereinheit (1) aufnehmenden ersten Abschnitt (2a) und einen mit dem in der Fahrzeugwandung vorgesehenen Fensterausschnitt (10) verbindbaren zweiten Abschnitt (2b) aufweist, wobei der Fensterausschnitt (10) einen umlaufenden Steg (3) aufweist der gegenüber der Fahrzeugwandung zurückgesetzt ist und der zweite Abschnitt (2b) des Fenstereinfassprofils (2) auf den Steg (3) aufsteckbar ist, wobei die Breite des Fenstereinfassprofils (2), die Breite des Fensterausschnitts (10) nicht überschreitet sowie ein Schienenfahrzeug mit einer derartigen Halterung.

## Beschreibung

Die Erfindung betrifft eine Halterung für eine Fenstereinheit in einem in der Fahrzeugwandung eines Fahrzeuges vorgesehenen Fensterausschnitt, mit einem die Fenstereinheit umlaufend erfassenden elastischen Fenstereinfassprofil, welches einen die Fenstereinheit aufnehmenden ersten Abschnitt und einen mit der Fahrzeugwandung des Fensterausschnitts verbindbaren zweiten Abschnitt aufweist, sowie ein Schienenfahrzeug mit einer derartigen Halterung.

Bislang werden Fensterscheiben in Schienenfahrzeugen entweder im Rohbau direkt eingeklebt oder es werden Fenstersysteme mit eingeklebten Montagerahmen verwendet. Rein gummigefasste System werden erst wieder in letzter Zeit häufiger verwendet. Bei diesen bekannten Systemen wird das Fenstereinfassprofil meist durch einen senkrechten Haltesteg im Fensterausschnitt gehalten. Dieser ist Bestandteil der Außenhautbeblechung. Dadurch steht das Fenstereinfassprofil über die Außenbeblechung über. Eine derartige Halterung wird beispielsweise in der DE 20102539 U1 offenbart.

Die Aufgabe der vorliegenden Erfindung besteht darin, eine Halterung sowie ein Schienenfahrzeug der oben genannten Art zu entwickeln, wobei die Halterung einen weitestgehend außenhautbündigen Einbau einer Fenstereinheit ermöglicht.

Die Aufgabe wird erfindungsgemäß dadurch gelöst, dass der Fensterausschnitt einen umlaufenden Steg aufweist, der gegenüber der Fahrzeugwandung zurückgesetzt ist und der zweite Abschnitt des Fenstereinfassprofils auf den Steg aufsteckbar ist, wobei die Breite des Fensterprofils die Breite des Fensterausschnitts nicht überschreitet. Vorteilhaft ist demnach vorgesehen, dass das Fenstereinfassprofil nur innerhalb des Rohbau-Fensterausschnittes liegt und keine, die Außenbeblechung der Fahrzeugaußenwandung einseitig umgreifende Lippe aufweist. Damit ist es von den die Außenbeblechung betreffenden Toleranzen unabhängig.

Nach einem weiteren Merkmal ist vorgesehen, dass das Fenstereinfassprofil mittels Befestigungsmittel am Steg fixierbar ist, wobei es sich dabei vorzugsweise um lösbare Befestigungsmittel wie Schrauben handelt. Das Fenstereinfassprofil wird dadurch zusätzlich mittels Schrauben auf dem Steg fixiert und gegen ein Herausrutschen gesichert.

Nach einem besonderen Merkmal der Erfindung ist zum Fixieren der Fenstereinheit, zur Abdeckung der Sicherheitsschrauben und zum Erzeugen der erforderlichen Anpresskraft des Fenstereinfassprofils gegen die Anlagefläche des Rohbaus ein an der nach außen gerichteten Seite der Fenstereinheit Abdeckprofil vorgesehen, welches zwei keilförmige Kedern und ein Zwischenstück umfasst. Das Abdeckprofil ist mit dem Fenstereinfassprofil mittels der Kedern und im Fenstereinfassprofil vorgesehenen korrespondierenden Fugen fixierbar.

Vorteilhaft weist das Fenstereinfassprofil an der nach innen gerichteten Seite der Fenstereinheit ein weiteres Abdeckprofil auf, welches mittels einer Keder mit einer im Fenstereinfassprofil vorgesehenen korrespondierenden Fuge verbindbar ist, wobei das Abdeckprofil einen Übergang zur Seiteninnenwandung des Fahrzeuges bildet. Dies dient dem Verspannen der Fenstereinheit und gleichzeitig als Übergang zur Seitenwandverkleidung des Fahrzeuges. Somit ist es möglich, bei gleichbleibendem Rohbauausschnitt verschiedene Montagearten eines Fensters zu wählen (gummigefasste Fenster, eingeklebte Glasscheibe, Fenstersystem mit eingeklebten Montagerahmen). Bei allen drei Montagevarianten wird ein weitestgehend außenhautbündiger Fenstereinbau ermöglicht.

Nach einem weiteren Merkmal der Erfindung ist vorgesehen, dass die Abdichtung gegenüber dem Fensterausschnitt über eine Dichtungslippe erfolgt, die vorzugsweise konkav ausgebildet ist. Alternativ kann die Abdichtung gegenüber dem Fensterausschnitt auch über einen als Hohlkammer ausgebildeten Profilabschluss des Fenstereinfassprofils erfolgen. Die Lippe bzw. der Profilabschluss werden dabei an die Fläche des Rohbau-Fensterausschnittes gepresst.

Weitere Vorteile der Erfindung ergeben sich anhand der nun folgenden Beschreibung eines in der Zeichnung dargestellten Ausführungsbeispieles. Darin zeigen:
- Fig. 1: eine erste Variante einer Halterung für eine Fensterscheibe in einer Querschnittsdarstellung,
- Fig. 2: eine weitere Variante einer Halterung für eine Fensterscheibe in einer Querschnittsdarstellung.

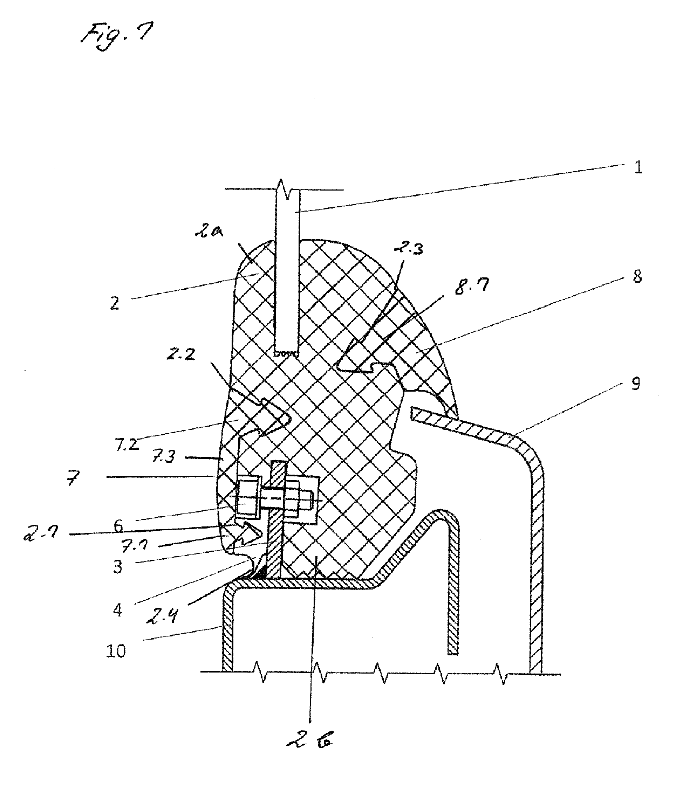

Die in Fig. 1 dargestellte Ausführungsform einer Halterung für eine Fenstereinheit 1 in einem, in der Fahrzeugwandung eines Fahrzeuges vorgesehenen Fensterausschnitt 10 besteht aus einem die Fenstereinheit 1 umfassenden elastischen Fenstereinfassungsprofil 2, welches auf einen in den Rohbau-Fensterausschnitt 10 eingeschweißten umlaufenden Steg 3 aufgesteckt wird. Das Fenstereinfassungsprofil 2 weist einen die Fenstereinheit 1 aufnehmenden ersten Abschnitt 2a und einen mit dem in der Fahrzeugwandung vorgesehenen Fensterausschnitt 10 verbindbaren zweiten Abschnitt 2b auf, wobei der umlaufende Steg 3 gegenüber der Fahrzeugwandung zurückgesetzt ist und der zweite Abschnitt 2b des Fenstereinfassprofils 2 auf den Steg derart aufsteckbar ist, dass die Breite des Fenstereinfassprofils 2 die Breite des Fensterausschnitts 10 nicht überschreitet.

Unter den Begriff "Fenstereinheit" wird beispielsweise eine Fensterglasscheibe, ein Klappfenster oder Anzeigefenster verstanden.

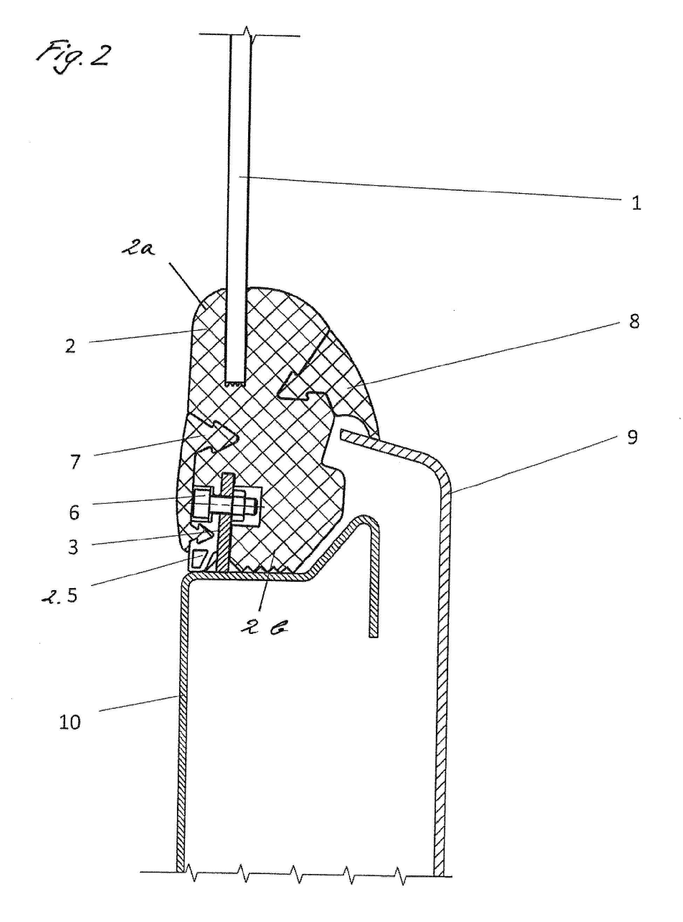

Der Steg 3 ist dabei gegenüber der Außenverblechung des Wagenkastens zurückgesetzt. Das Fenstereinfassprofil 2 liegt dadurch nur innerhalb des Rohbauausschnittes und weist keine die Außenbeblechung einseitig umgreifende Lippe auf. Damit ist es von den die Außenbeblechung betreffenden Toleranzen unabhängig. Die Dichtung erfolgt gemäß der Variante nach Fig. 1 über eine konkav ausgeformte Lippe 2.4 und gemäß der Variante nach Fig. 2 über einen als Hohlkammer ausgebildeten Profilabschluss 2.5, welche/welcher an die Fläche des Rohbauausschnittes gepresst werden. Das Fenstereinfassprofil 2 wird hier zusätzlich mittels Schrauben 6 auf dem Steg 3 fixiert und gegen ein Herausrutschen gesichert.

Zum Fixieren der Fenstereinheit, zur Abdeckung der Sicherheitsschrauben und zum Erzeugen der erforderlichen Anpresskraft des Fenstereinfassprofils gegen die Anlagefläche des Rohbaus kommt ein Abdeckprofil 7 zur Anwendung. Dieses Abdeckprofil 7 besteht aus zwei keilförmigen Kedern 7.1, 7.2 und einem Zwischenstück 7.3, und wird von außen in das Fenstereinfassprofil 2 eingeschlagen. Auf der Fensterinnenseite ist ein weiteres Abdeckprofil 8 vorgesehen, welches nur einen Keder 8.1 umfasst, und welches dem Verspannen der Fenstereinheit dient und gleichzeitig den Übergang zur Seitenwandverkleidung 9 darstellt. Somit ist es möglich, bei gleichbleibendem Rohbauausschnitt verschiedene Montagearten eines Fensters zu wählen (gummigefasste Fenster, eingeklebte Glasscheibe, Fenstersystem mit eingeklebten Montagerahmen). Bei allen drei Montagevarianten wird ein weitestgehend außenhautbündiger Fenstereinbau ermöglicht.

## Patentansprüche

1. Halterung für eine Fenstereinheit in einem in der Fahrzeugwandung eines Fahrzeuges vorgesehenen Fensterausschnitt (10), mit einem die Fenstereinheit (1) umlaufend erfassenden elastischen Fenstereinfassprofil (2), welches einen die Fenstereinheit (1) aufnehmenden ersten Abschnitt (2a) und einen mit dem in der Fahrzeugwandung vorgesehenen Fensterausschnitt (10) verbindbaren zweiten Abschnitt (2b) aufweist, **dadurch gekennzeichnet, dass**
der Fensterausschnitt (10) einen umlaufenden Steg (3) aufweist der gegenüber der Fahrzeugwandung zurückgesetzt ist und der zweite Abschnitt (2b) des Fenstereinfassprofils (2) auf den Steg (3) aufsteckbar ist, wobei die Breite des Fenstereinfassprofils (2), die Breite des Fensterausschnitts (10) nicht überschreitet.

2. Halterung nach Anspruch 1, **dadurch gekennzeichnet, dass** das Fenstereinfassprofil (2) mittels Befestigungsmittel (6) am Steg (3) fixierbar ist.

3. Halterung nach den Ansprüchen 1 und 2, **dadurch gekennzeichnet, dass** das Fenstereinfassprofil (2) an der nach außen gerichteten Seite der Fenstereinheit (1) ein Abdeckprofil (7) aufweist, welches zwei keilförmige Kedern (7.1, 7.2) und ein Zwischenstück (7.3) umfasst, wobei das Abdeckprofil (7) mit dem Fenstereinfassprofil (2) mittels der Kedern (7.1, 7.2) und im Fenstereinfassprofil (2) vorgesehenen korrespondierenden Fugen (2.1, 2.2) verbindbar ist.

4. Halterung nach den Ansprüchen 1 bis 3, **dadurch gekennzeichnet, dass** das Fenstereinfassprofil (2) an der nach innen gerichteten Seite der Fenstereinheit (1) ein weiteres Abdeckprofil (8) aufweist, welches mittels einer Keder (8.1) mit einer im Fenstereinfassprofil (2) vorgesehenen korrespondierenden Fuge (2.3) verbindbar ist, wobei das Abdeckprofil (8) einen Übergang zur Seiteninnenwandung (9) des Schienenfahrzeuges bildet.

5. Halterung nach einem der Ansprüche 1 bis 4, **dadurch gekennzeichnet, dass** die Abdichtung gegenüber dem Fensterausschnitt (10) über eine Dichtungslippe (2.4) erfolgt, die vorzugsweise konkav ausgebildet ist.

6. Halterung nach einem der Ansprüche 1 bis 4, **dadurch gekennzeichnet, dass** die Abdichtung gegenüber dem Fensterausschnitt (10) über einen als Hohlkammer ausgebildeten Profilabschluss (2.5) des Fenstereinfassprofils (2) erfolgt.

7. Schienenfahrzeug mit einer Halterung für eine Fenstereinheit in einem in der Fahrzeugwandung eines Fahrzeuges vorgesehenen Fensterausschnitt (10), mit einem die Fenstereinheit (1) umlaufend erfassenden elastischen Fenstereinfassprofil (2), welches einen die Fenstereinheit (1) aufnehmenden ersten Abschnitt (2a) und einen mit dem in der Fahrzeugwandung vorgesehenen Fensterausschnitt (10) verbindbaren zweiten Abschnitt (2b) aufweist, **dadurch gekennzeichnet, dass** die Halterung nach mindestens einem der Ansprüche 1 bis 6 ausgebildet ist.
